# EUROPEAN PATENT SPECIFICATION

(11) **EP 3 723 978 B1**
(45) Date of publication and mention of the grant of the patent: **26.03.2025**
(21) Application number: 18778951.6
(22) Date of filing: 07.11.2018
(51) Int. Cl.: B32B 7/12, B32B 15/08, B32B 15/085, B32B 15/088, B32B 15/09, B32B 15/20, B32B 27/08, B32B 27/32, B32B 27/34, B32B 27/36

(54) **ALKALINE RESISTANT MULTILAYER STRUCTURE**
ALKALIBESTÄNDIGE MEHRSCHICHTSTRUKTUR
STRUCTURE MULTICOUCHE RÉSISTANT AUX ALCALINS

(30) Priority: 14.12.2017 EP 17207331
(43) Date of publication of application: 21.10.2020
(73) Proprietor: Amcor Flexibles Italia S.R.L., 36030 Lugo Di Vicenza (VI) (IT)
(72) Inventor: ARCARO, Alberto, 31050 PONZANO VENETO (VT) (IT); FESSLER, Thomas, 78467 CONSTANZ (DE); VAN NIEUWENHOVE, Andries, 9450 DENDERHOUTEM (BE)
(74) Representative: Vossius & Partner Patentanwälte Rechtsanwälte mbB
(86) International application number: PCT/EP2018/077019
(87) International publication number: WO 2019/115050

(56) References cited:
- EP-A1- 1 736 519
- WO-A1-2010/100490
- WO-A1-2016/131742
- WO-A1-2017/125277
- WO-A1-2017/151071
- WO-A1-2019/197234
- US-A1- 2014 209 632

## Description

### Field of the Invention

The present invention is related to alkaline resistant multilayer structures for the production of sachets, pouches, stand-up pouches (SUP), bags and bag-on-valve (BOV) systems for the packaging of alkaline filling goods.

Within the packaging industry, it is known to use multilayer flexible plastic films to form packaging for cosmetics and for home and personal care products.

A typical example of such packaging is personal care products that need to be dispensed in known quantities, for example hair dyes, where a single sachet is sized to contain a predetermined quantity of hair dye required to achieve the desired coloration. A further example is the formation of sample sachets used to contain a small sample of a particular cosmetic or personal care product and intended to be distributed for free as promotional samples, often being fixed inside relevant magazines. Still another example is the (stand-up) pouch containing liquid laundry detergent and home cleaning goods replacing the original rigid container.

Laminated flexible films used to produce these known packaging typically include:
- an inner film, generally a polyolefin film, typically polyethylene film, the polyolefin providing strength and flexibility and the function as seal layer;
- a middle film, typically an aluminum foil being provided as a non-porous layer to prevent the escape of contents from the filled packaging; and
- an outer film which typically includes a polyester, nylon or polyolefin layer, onto which any desired branding or colouring may be printed.

The multilayer films currently used are generally produced by extrusion lamination or adhesive lamination.

WO 2016/096280 and WO 2016/096284 relate to a packaging for products for the oxidative dyeing of keratin fibres, said packaging being obtained from a multilayer film comprising at least two polymer layers, a metallic layer and an additional adhesive polymer layer selected from the group consisting of polyurethane, polyester, polyamide, polyethylene terephthalate, polybutylene terephthalate and polyolefin.

EP 1 371 575 discloses a vessel for hair-colouring substances, produced from a multilayer film comprising a gas-barrier layer selected from silicon dioxide layer, poly (ethylene vinyl alcohol), polyvinyl alcohol and combinations thereof. The multilayer structures, as illustrated, are adhesively laminated by a polyether-based polyurethane adhesive.

US 2014/0209632 discloses an internal pouch, composed of a first and a second internal pouch, held in a double-structured aerosol can, for hair-colouring substances, the pouches being prepared from a multilayer film including a polyolefin inner layer, an adhesive resin layer on the inner layer side, an aluminum foil, an adhesive resin layer on the outer layer side and a thermoplastic resin outer layer. The polyurethane adhesive is of a solvent-based polyether-type urethane resin for the pouch intended to comprise alkaline filling goods and of a solvent-based polyester-type urethane resin for the pouch intended to comprise acidic filling goods.

US 2013/0161349 discloses a bag-on-valve system comprising a pressure container having a flexible filling material container being formed from a flexible film laminate which has a metal layer, a plastics layer and a sealing layer, characterized in that the plastics layer is a polyester layer, the sealing layer is a polyolefin layer, and wherein a bond-promoting layer, provided between the polyester layer and the sealing layer and between the metal layer and the polyester layer, comprises acrylate or polyurethane, preferably aliphatic or aromatic polyurethane, more preferably aromatic polyurethane. The bag-on-valve system is intended for comprising unsaturated filling goods such as terpenes.

The prior-art multilayer films, prepared by adhesive lamination, are not particularly suitable for packaging products that include aggressive chemical components such as certain hair dyes, household detergents and cleaning products. Though there are prior-art adhesive systems that initially provide sufficient bond strength, the retention of said bond strength over time is not comparable with that of the current extrusion-laminated systems and may be insufficient for particular contents. The inner polyolefin layer of the conventional multilayer films cannot sufficiently protect the further layers from being attacked by the aggressive chemicals, leading to failure of the film due to delamination of the individual layers within a time frame that is significantly less than the desired shelf life of the product.

In order to retain bond strength over time with strongly alkaline filling components, extrusion-laminated structures including a highly acidic polyethylene copolymer tie layer in between the aluminum foil barrier layer and the polyolefin seal layer are currently used. Yet, said tie layer strongly limits the possibilities of the composing layers of the multilayer film and in particular the type of seal layer - only three-layer structures of the type "polyethylene terephthalate /aluminum foil / acid tie layer /polyethylene seal layer" or "oriented polyamide /aluminum foil / acid tie layer / polyethylene seal layer" are possible wherein a dedicated and expensive polyethylene layer should be used.

WO 2010/100490 discloses a chemically-resistant laminate film comprising an outer film including a layer of aluminum foil bonded to a heat-sealable film by a chemically-resistant layer comprising an ethylene acrylic acid copolymer.

The expensive and typically thick tie layer (10 - 25 g/m²), the dedicated and expensive seal layer and the overall speed of the extrusion lamination process necessitate the development of cheaper, but reliable alternatives, preferably obtained by a faster process.

In recent years, there has been an increased tendency towards sustainable packaging laminates. Replacing solvent-based by water-based adhesives evidently represents an easy means to dramatically improve global warming potential (GWP) associated to the absence of organic solvents. Yet, curing time and green strength of the prior-art water-based polyurethane adhesives, just like solvent-based polyurethane adhesives, in general do not allow high lamination and slitting

EP1736519 relates to improved adhesion of the materials used in flexible packaging laminates and to reduce the tendency of such laminates to delaminate and WO2017125277 relates to the use of a particular one-component laminating adhesive for composite film lamination in food application.

### Aim of the Invention

The present invention aims to provide a multilayer film that does not present the drawbacks of the prior art.

It is another aim of the present invention to provide a multilayer film for the production of packaging for aggressive chemical filling components, in particular of alkaline components, wherein the multilayer film is characterized by a bond strength that is substantially unaffected by alkaline components over time, said multilayer film being produced by a sustainable and fast adhesive lamination process, using substantially organic solvent-free adhesives.

### Summary of the invention

The present invention discloses a multilayer structure, comprising a barrier layer, adhesively sandwiched between a first polymer layer and a second polymer layer by adhesive layers, wherein:
- the barrier layer is selected from the group consisting of aluminum foil, a metal oxide layer, and metallized polymer layer, vinylidene chloride (co)polymers, ethylene-vinyl alcohol copolymers, vinylidene chloride (co)polymer-coated films, ethylene-vinyl alcohol copolymer-coated films, hybrid systems comprising a mixture of vinyl alcohol comprising (co)polymer(s) and metal oxide(s), hybrid systems comprising a mixture of vinyl alcohol comprising (co)polymer(s) and inorganic layered mineral(s) and combinations thereof;
- the first polymer layer is selected from the group consisting of polyester, polyamide and polyolefin;
- the second polymer layer is selected from the group consisting of polyolefin, polyacrylo-nitrile, acrylonitrile/methylacrylate copolymer, cyclic olefin (co)polymer, ionomer and combinations thereof;
- at least the adhesive layer between the barrier layer and the second polymer layer comprises crosslinked (meth)acrylic copolymers;
said multilayer structure being characterized by a bond strength according to ASTM F904 of at least 2.0 N/15 mm, preferably of at least 2.5 N/15 mm, more preferably at least 3.0 N/ 15 mm after a 1-month contact at 55°C with a solution having a pH of 8 or more.

Preferred embodiments of the present invention disclose one or more of the following features:
- the multilayer structure comprises an additional third polymer layer, adhesively sandwiched between the barrier layer and the second polymer layer, the adhesive layers comprising crosslinked (meth)acrylic copolymers;
- the additional third polymer layer is a polyamide layer;
- the barrier layer is an aluminum foil;
- the second polymer layer is a polyolefin selected from the group consisting of polyethylene homopolymer, propylene homopolymer, 1-butylene homopolymer, an ethylene copolymer, a propylene copolymer, a 1-butylene copolymer and mixtures thereof;
- the thickness of the first polymer layer is comprised between 6 and 50 µm, preferably between 10 and 30 µm;
- the thickness of the second polymer layer is comprised between 20 and 250 µm, preferably between 40 and 150 µm;
- the thickness of the aluminum foil is comprised between 5 and 20 µm, preferably between 6 and 12 µm;
- the thickness of the adhesive layer is comprised between 0.5 and 5 µm, preferably between 2 and 4 µm;
- the adhesive layers comprise (meth)acrylic copolymer segments comprising:
   10 - 90 parts of copolymerized vinyl aromatics;
   90 - 10 parts of copolymerized (meth)acrylate monomers;
- the adhesive layers comprise moieties selected from the group consisting of urethane, amide, isocyanurate, urea, allophanate, isocyanate and mixtures thereof, linking (meth)acrylic copolymer segments;
- the adhesive layer is obtained from a water-based (meth)acrylic copolymer emulsion and a polyisocyanate;
- the adhesive layer is obtained from:
   a water-based (meth)acrylic copolymer emulsion, said (meth)acrylic copolymer comprising:
      10 - 90 parts of copolymerized vinyl aromatics;
      90 - 10 parts of copolymerized (meth)acrylate monomers;
   and an aliphatic polyisocyanate; preferably an aliphatic diisocyanate.

The present invention further discloses the use of the multilayer structure for the production of sachets, pouches, bags and bag-on-valve systems, and in particular for the production sachets, pouches, bags and bag-on-valve systems for alkaline filling materials having a pH of 8 or more.

### Brief Description of the Drawings

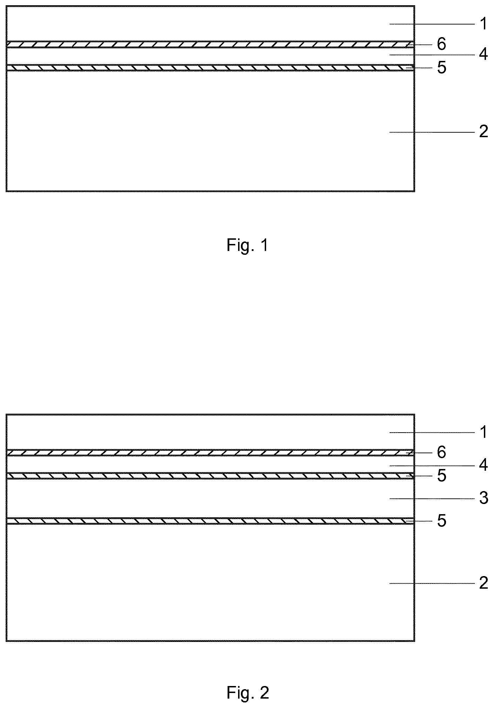

Fig.1 shows a three-ply multilayer structure in accordance with the present invention.
Fig.2 shows a four-ply multilayer structure in accordance with the present invention.

### Key

1. first polymer layer
2. second polymer layer
3. optional third polymer layer
4. barrier layer
5. water-based (meth)acrylic copolymer adhesive
6. adhesive

### Detailed Description of the Invention

The present invention provides a multilayer film structure, in particular a multilayer film structure for packaging alkaline filling goods, said multilayer film structure being substantially insensitive to the alkaline content during storage of the packaging for at least one month at 55°C. The inventors have observed that a substantially unaffected bond strength after a 1-month storage at 55°C, guarantees no structural weakening of the multilayer structure when stored under ambient conditions, up to at least three years.

The multilayer film structure of the present invention comprises a barrier layer, adhesively sandwiched between a first polymer layer and a second polymer layer wherein at least the adhesive layer between the barrier layer and the second polymer layer comprises a crosslinked (meth)acrylic copolymer comprising adhesive.

The first polymer layer is selected from the group consisting of polyester, polyamide and polyolefin.

The first polymer layer preferably is a polyester layer, more preferably a polyethylene terephthalate layer.

The second polymer layer is selected from the group consisting of polyolefin, polyacrylonitrile, acrylonitrile/methylacrylate copolymer, cyclic olefin (co)polymer, ionomer and combinations thereof.

The second polymer layer preferably comprises a polyolefin selected from the group consisting of polyethylene homopolymer, propylene homopolymer, 1-butylene homopolymer, an ethylene copolymer, a propylene copolymer, a 1-butylene copolymer and mixtures thereof,
- the comonomers of the ethylene copolymers being selected from the group consisting of vinylacetate, methyl acrylate, C3 - C8 alpha olefins, and mixtures thereof;
- the comonomers of the propylene copolymers being selected from the group consisting of vinylacetate, methyl acrylate, ethylene, C4 - C8 alpha olefins, and mixtures thereof;
- the comonomers of the 1-butylene copolymers being selected from the group consisting of vinylacetate, methyl acrylate, ethylene, propylene, C5 - C8 alpha olefins, and mixtures thereof.

The barrier layer is selected from the group consisting of aluminum foil, a metal oxide layer, a metallized polymer layer, vinylidene chloride (co)polymers, ethylene-vinyl alcohol copolymers, vinylidene chloride (co)polymer-coated films, ethylene-vinyl alcohol copolymer-coated films, hybrid systems comprising a mixture of vinyl alcohol comprising (co)polymer(s) and metal oxide(s), hybrid systems comprising a mixture of vinyl alcohol comprising (co)polymer(s) and inorganic layered mineral(s) and combinations thereof.

The metallized polymer layer is preferably a metallized polypropylene layer. Metallization preferably comprises aluminum metallization.

The metal oxide or metal oxide layer is selected from the group consisting of aluminum oxide, silicon oxide, tin oxide, magnesium oxide, cerium oxide, hafnium oxide, tantalum oxide, titanium oxide, yttrium oxide, zirconium oxide and mixtures thereof. Preferably, the metal oxide or metal oxide layer is silicon oxide or aluminum oxide.

The inorganic layered mineral preferably is an inorganic compound wherein very thin unit crystal layers are superposed to form one lamellar particle, such as phyllosilicates including kaolinite clay minerals, antigorite clay minerals, smectite clay minerals, vermiculite clay minerals and micas or mica clay minerals.

Preferably, the barrier layer is an aluminum foil.

The multilayer film structure of the present invention may further comprise an additional third layer, adhesively sandwiched between the barrier layer and the second polymer layer.

The additional third polymer layer preferably is a polyamide layer selected from the group consisting of nylon 6, nylon 9, nylon 11, nylon 12, nylon 66, nylon 69, nylon 610, nylon 612, nylon 6/12, nylon 6/66, nylon 6/69, nylon 66/610, nylon 66/6, nylon 6T, nylon 12T, nylon MXD6, nylon MXD6/MXDI, nylon 6I/6T and blends thereof.

Preferably, the additional third layer is a poly(caprolactam) (nylon 6) or a poly(hexamethylene adipamide) (nylon 66) layer, more preferably a nylon 6 layer.

The adhesive for laminating the first polymer layer, the barrier layer, the optional third layer and the second layer is obtained from combining one or more (meth)acrylic copolymer(s) and one or more polyisocyanate(s).

For the particular case where the barrier layer is an aluminum foil, the (meth)acrylic copolymer/polyisocyanate based adhesive is the laminating adhesive for all interfaces between the aluminum foil and the second polymer layer; for laminating the aluminum foil and the first polymer layer, the use of the (meth)acrylic copolymer/polyisocyanate based adhesive is not mandatory .

The surfaces for adhesive lamination are preferably plasma treated, more preferably corona plasma treated.

The (meth)acrylic copolymer preferably is obtained from a water-based emulsion generally prepared by the known methods of emulsion polymerization using known anionic and/or non-ionic emulsifiers and water-soluble initiators. The emulsion polymerization is in general carried out at from 30°C to 150°C. In general, a polymer content of from 40 to 65 % by weight, measured by the DIN 53189 method, is obtained.

The (meth)acrylic copolymer comprises:
- from 10 to 90 % by weight, preferably 20 to 80 % by weight, more preferably 30 to 70 % by weight of copolymerized vinyl aromatic monomers;
- from 90 to 10 % by weight, preferably 80 to 20 % by weight, more preferably 70 to 30 % by weight of copolymerized (meth)acrylate monomers selected from the group consisting of (meth)acrylic acid, C1-C20 alkyl (meth)acrylate, hydroxyl functional C1-C20 alkyl (meth)acrylate and mixtures thereof.

Examples of vinyl aromatic monomers are styrene, α-methylstyrene, vinyltoluene, α- and p-methylstyrene, α-butylstyrene, 4-n-butylstyrene, 4-n-decylstyrene and vinyltoluene.

Examples of C1-C20 alkyl (meth)acrylate monomers are methyl (meth)acrylate, ethyl(meth)acrylate, propyl(meth)acrylate, n-butyl(meth)acrylate, isobutyl(meth)acrylate, hexyl (meth)acrylate, 2-ethylhexyl (meth)acrylate, lauryl or stearyl (meth)acrylate and cyclohexyl (meth)acrylate.

Examples of hydroxyl functional C1-C20 alkyl (meth)acrylate monomers are hydroxyethyl(meth)acrylic, hydroxypropyl(meth)acrylate and hydroxybutyl(meth)acrylate.

The (meth)acrylic copolymer may further comprise up to 20 % by weight of ethylenically unsaturated monomer(s) different from (meth)acrylic monomer(s) and vinyl aromatic monomers such as acrylonitrile, vinyl and allyl esters of carboxylic acids with 1 to 20 carbon atoms such as allyl acetate and allyl propionate, vinyl formate, vinyl acetate, vinyl propionate, acrylamide and vinyl chloride.

The polyisocyanate preferably is selected from the group consisting of hexamethylene diisocyanate, hydrogenated xylylene diisocyanate, isophorone diisocyanate, 2,2,4-trimethylhexamethylene diisocyanate, 1,12-diisocyanatododecane, norbornane diisocyanate, 2,4-bis-(8-isocyanatooctyl)-1,3-dioctyl cyclobutane, 4,4'-dicyclohexylmethane diisocyanate, xylylene diisocyanate tetramethylxylylene diisocyanate, 2,4 toluene diisocyanate, 2,6 toluene diisocyanate; 4,4-diphenylmethane diisocyanate; 4,4'-diphenyldimethane diisocyanate; di- and tetra- alkyldiphenylmethane diisocyanates.

Optionally, the polyisocyanate is obtained from the at least partial reaction between some of the isocyanate groups of a polyisocyanate with an isocyanate functionality higher than 2 and a monohydroxy C5-C25 saturated or partially unsaturated hydrocarbon alcohol.

The polyisocyanate is preferably an aliphatic polyisocyanate, more preferably hexamethylene diisocyanate.

The polyisocyanate is in general provided to the (meth)acrylic copolymer in an amount ranging from 1 to 20 % by weight, preferably from 3 to 15 % by weight, more preferably from 4 to 10 % by weight, of the total weight of (meth)acrylic copolymer(s) and polyisocyanate(s).

The adhesive comprising the (meth)acrylic copolymer(s) and the polyisocyanate(s) is provided as a water-based emulsion, thus substantially avoiding volatile organic compounds contrary to the prior-art solvent-based polyurethane adhesives and contributing to sustainability of the multilayer structure.

The inventors have surprisingly observed that the two-component water-based emulsion, comprising the (meth)acrylic copolymer(s) and the polyisocyanate(s), contrary to water-based polyurethane adhesives, allows for high curing speeds and green strength, thus allowing high lamination and slitting speeds implying a further contribution to sustainability.

The adhesive may further comprise one or more tackifiers, one or more wetting agent(s); one or more plasticizer(s); one or more antioxidant(s), one or more antifoaming agent(s) and of one or more rheology modifier(s).

The multilayer film structure is converted into packaging for alkaline filling material, wherein the first polymer layer forms the outside of the packaging while the second polymer layer is in contact with the alkaline filling material.

By "alkaline filling material", the present invention means material characterized by a pH comprised between 8 and 14.

The thickness of the first polymer and the third polymer layer is comprised between 6 and 50 µm, preferably between 10 and 30 µm.

The thickness of the second polymer layer is comprised between 20 and 250 µm, preferably between 40 and 150 µm.

The thickness of the aluminum foil is comprised between 5 and 20 µm, preferably between 6 and 12 µm.

The thickness of the metallized polymer layer is comprised between 5 and 50 µm, preferably between 10 and 40 µm, wherein the thickness of the metallization layer is comprised between 3.5 and 500 nm.

The thickness of the adhesive layer is comprised between 0.5 and 5 µm, preferably between 2 and 4 µm.

The packaging, prepared from the multilayer film of the present invention, provides an outstanding alkaline resistance upon being in contact with the alkaline contents for a longer period of time and at temperatures above room temperature, conditions that may be observed during transport and storage.

By "alkaline resistant", the present invention means that the bond strength, according to ASTM F904, after a 1-month contact at 55°C with a solution having a pH of 8 or more, is at least 70 %, preferably at least 80 %, more preferably at least 90 % of the bond strength measured before the test. Most preferably, the bond strength after the test is equal or even higher than the bond strength before the test.

As will be clear for those skilled in the art, the bond strength as measured is representative for the affected adhesive layer. As the inner polyolefin layer (second layer) tends to be either porous to the alkaline solutions or is directly corroded by said solutions, such that further layers become subject to further attack, the measured bond strength decrease is substantially indicative for a considerable structural and functional weakening of the packaging and real delamination between the second layer and the aluminum foil and/or between the second and the additional third layer and/or the additional third layer and the aluminum foil.

The multilayer films of the present invention are characterized by a bond strength, according to ASTM F904, of at least 2.0 N/15 mm, preferably of at least 2.5 N/ 15 mm, more preferably of at least 3.0 N/15 mm, most preferably of at least 3.5 N/15 mm and even at least 4 N/15 mm, after a 1-month contact at 55°C with a solution having a pH of 8 or more.

### Examples

### Example 1

A multilayer film was prepared from a polyethylene terephthalate film with a thickness of 12 µm, an aluminum foil with a thickness of 9 µm and a polyolefin layer of 75 µm, said layer being a linear low-density polyethylene layer. The polyethylene terephthalate layer and the aluminum foil were adhesive-laminated using Loctite LA 2640/LA 6800, a polyester polyurethane adhesive (Henkel). The aluminum foil and the polyolefin layer were adhesive laminated, using Epotal CF 605X (BASF), a (meth)acrylic copolymer comprising copolymerized vinyl aromatic monomers and Basonat LR 9056 (BASF), hexamethylene diisocyanate, wherein the weight ratio acrylic copolymer/ polyisocyanate was 95,2/4.8. The adhesive emulsion was applied by a gravure cylinder whereupon water was flashed before the lamination step. The thickness of the dried adhesive layer was 3 µm.

The multilayer film was converted into sachets with dimension of 120 x 80 mm and filled with a 10 ml solution with a pH of 9.2 and 11.1 and with "Schwarzkopf Palette 1-1 Black ammonia hair dye" for which a pH of 11.2 was measured, respectively (example 1).

Once sealed, the sachets were then stored at a temperature of 55°C and the bond strength (in N/15 mm), according to ASTM F904 was measured after one month.

An identical test was performed for an identical multilayer structure, adhesively laminated using a polyester polyurethane based adhesive Loctite LA 2640/ LA 6800 of the prior art only (comparative example 1).

The initial and the aged bond strength according to ASTM F904 between the aluminum foil and the linear low-density polyethylene layer are reproduced in Table 1, wherein the bond strength values are an average of 3 measurements, the spread on the measured values being reproduced as well, and wherein in:
- column 2: the initial bond strength in N/15 mm is reproduced;
- column 3: the residual bond strength in N/15 mm after one month at 55°C with a content of pH=9.2 is reproduced;
- column 4: the residual bond strength in N/15 mm after one month at 55°C with a content of pH=11.1 is reproduced;
- column 5: the residual bond strength in N/15 mm after one month at 55°C with a "Schwarzkopf Palette 1-1 Black ammonia hair dye" content with a pH of 11.2 is reproduced.

**Table 1**

| Example | Initial | pH 9.2 | pH 11.1 | Schwarzkopf |
|---|---|---|---|---|
| 1 | 4.4 ± 0.3 | 4.5 ±0.2 | 4.7 ± 0.3 | 4.2 ± 0.3 |
| Comp. 1 | 6.1 ± 0.5 | 4.8 ± 0.3 | 1.9 ± 0.4 | delaminated |

### Example 2

A multilayer film was prepared from a polyethylene terephthalate film with a thickness of 12 µm, an aluminum foil with a thickness of 9 µm, a Nylon 6 layer with a thickness of 15 µm and a polyolefin layer of 80 µm, said polyolefin layer being a linear low-density polyethylene layer. The polyethylene terephthalate layer and the aluminum foil were laminated using Tomoflex TM 307A/B (Toyo), a polyether polyurethane adhesive. The aluminum foil, the Nylon 6 and the polyolefin layers were adhesive laminated using Epotal CF 605X and Basonat LR 9056 in a weight ratio 95.2/4.8. The thickness of the dried adhesive layer was 3 µm.

The multilayer film was converted into sachets with dimension of 120 x 80 mm and filled with 10 ml "Schwarzkopf Palette 1-1 Black ammonia hair dye" with a pH of 11.2 (example 2).

An identical test was performed for an identical multilayer film, adhesively laminated using a polyether polyurethane based adhesive (Tomoflex TM 307A/B) of the prior art only (comparative example 2).

The initial and aged bond strength according to ASTM F 904 between the second and the third layers are reproduced in Table 2, wherein the bond strength values are an average of 3 measurements, the spread on the measured values being reproduced as well, and wherein in:
- column 2: the initial bond strength in N/15 mm is reproduced;
- column 3: the residual bond strength in N/15 mm after one month at 55°C with a "Schwarzkopf Palette 1-1 Black ammonia hair dye" content with a pH of 11.2 is reproduced.

**Table 2**

| Example | Initial | Schwarzkopf |
|---|---|---|
| 2 | 4.3 ± 0.4 | 3.9 ± 0.3 |
| Comp. 2 | 6.7 ± 0.5 | 0.8 ± 0.5 |

### Example 3

A multilayer film was prepared from a polyethylene terephthalate film with a thickness of 12 µm, a metallized oriented polypropylene layer with a thickness of 13 µm and a polyolefin layer of 75 µm, said polyolefin layer being a linear low-density polyethylene layer. The layers were adhesive laminated, using Epotal CF 607X and Basonat LR 9056 in a weight ratio 95,2/4.8. The thickness of the dried adhesive layer was 3 µm.

The multilayer film was converted into sachets with dimension of 120 x 80 mm and filled with a 10 ml solution with a pH of 9.2 and 11.1, respectively.

The initial bond strength according to ASTM F904 of 2.5 N/15 mm remained unaffected after a 1-month contact at 55°C with both solutions.

### Example 4

A multilayer film was prepared from a polyethylene terephthalate film with a thickness of 12 µm, an aluminum foil with a thickness of 8 µm and a polypropylene layer of 60 µm. The layers were adhesive laminated, using Epotal CF 607X and Basonat LR 9056 in a weight ratio 95,2/4.8. The thickness of the dried adhesive layer was 3 µm.

The multilayer film was converted into sachets with dimension of 120 x 80 mm and filled with 10 ml of "Candeggina Classica", a 5 % sodium hypochlorite solution for which a pH of 12.2 was measured.

The initial bond strength according to ASTM F904 of 4.4 N/15mm dropped to 3.6 N/15 mm after a 1-month contact at 55°C.

As clearly appears from the examples, multilayer structures of the present invention, adhesively laminated with the crosslinked (meth)acrylic copolymer adhesive, are not affected by alkaline solutions upon storage: the bond strength between the composing layers remains substantially unchanged, contrary to the multilayer structures of prior art (comparative examples 1 and 2) where an important drop in bond strength, indicative for a considerable structural weakening and delamination of the composing layers, is observed especially for highly alkaline solutions.

## Claims

1. Multilayer structure, comprising a barrier layer, adhesively sandwiched between a first polymer layer and a second polymer layer by adhesive layers, wherein:
- the barrier layer is selected from the group consisting of aluminum foil, a metal oxide layer, and metallized polymer layer, vinylidene chloride (co)polymers, ethylene-vinyl alcohol copolymers, vinylidene chloride (co)polymer-coated films, ethylene-vinyl alcohol copolymer-coated films, hybrid systems comprising a mixture of vinyl alcohol comprising (co)polymer(s) and metal oxide(s), hybrid systems comprising a mixture of vinyl alcohol comprising (co)polymer(s) and inorganic layered mineral(s) and combinations thereof;
- the first polymer layer is selected from the group consisting of polyester, polyamide and polyolefin;
- the second polymer layer is selected from the group consisting of polyolefin, polyacrylonitrile, acrylonitrile/methylacrylate copolymer, cyclic olefin (co)polymer, ionomer and combinations thereof;
- at least the adhesive layer between the barrier layer and the second polymer layer comprises crosslinked (meth)acrylic copolymers;
said multilayer structure being **characterized by** a bond strength, according to ASTM F904, of at least 2.0 N/15 mm, preferably of at least 2.5 N/15 mm, more preferably at least 3.0 N/15mm after a 1 month contact at 55°C with a solution having a pH of 8 or more.

2. The multilayer structure according to Claim 1 comprising an additional third polymer layer, adhesively sandwiched between the barrier layer and the second polymer layer, the adhesive layers comprising crosslinked (meth)acrylic copolymers.

3. The multilayer structure according to Claim 2, wherein the additional third polymer layer is a polyamide layer.

4. The multilayer structure according to any of Claims 1 to 3, wherein the barrier layer is an aluminum foil.

5. The multilayer structure according to any of Claims 1 to 4, wherein the second polymer layer is a polyolefin selected from the group consisting of polyethylene homopolymer, propylene homopolymer, 1-butylene homopolymer, an ethylene copolymer, a propylene copolymer, a 1-butylene copolymer and mixtures thereof.

6. The multilayer structure according to any of Claims 1 to 5, wherein the thickness of the first polymer layer is comprised between 6 and 50 µm, preferably between 10 and 30 µm.

7. The multilayer structure according to any of Claims 1 to 6, wherein the thickness of the second polymer layer is comprised between 20 and 250 µm, preferably between 40 and 150 µm.

8. The multilayer structure according to any of Claims 1 to 7, wherein the thickness of the aluminum foil is comprised between 5 and 20 µm, preferably between 6 and 12 µm.

9. The multilayer structure according to any of Claims 1 to 8, wherein the thickness of the adhesive layer is comprised between 0.5 and 5 µm, preferably between 2 and 4 µm.

10. The multilayer structure according to any of Claims 1 to 9, wherein the crosslinked (meth)acrylic copolymer comprising adhesive layers comprise (meth)acrylic copolymer segments comprising:
- 10 - 90 parts of copolymerized vinyl aromatics;
- 90 - 10 parts of copolymerized (meth)acrylate monomers;

11. The multilayer structure according to any of Claims 1 to 10, wherein the crosslinked (meth)acrylic copolymer comprising adhesive layers comprise moieties selected from the group consisting of urethane, amide, isocyanurate, urea, allophanate, isocyanate and mixtures thereof, linking (meth)acrylic copolymer segments.

12. The multilayer structure according to any of Claims 1 to 11, wherein the crosslinked (meth)acrylic copolymer comprising adhesive layer is obtained from a water-based (meth)acrylic copolymer emulsion and a polyisocyanate.

13. The multilayer structure according to any of Claims 1 to 12, wherein the crosslinked (meth)acrylic copolymer comprising adhesive layer is obtained from:
a water based (meth)acrylic copolymer emulsion, said (meth)acrylic copolymer comprising:
- 10 - 90 parts of copolymerized vinyl aromatics;
- 90 - 10 parts of copolymerized (meth)acrylate monomers;
and an aliphatic polyisocyanate; preferably an aliphatic diisocyanate.

14. Use of the multilayer structure according to any of Claims 1 to 13 for the production of sachets, pouches, bags and bag-on-valve systems.

15. Use of the multilayer structure according to any of Claims 1 to 13 for the production of sachets, pouches, bags and bag-on-valve systems for alkaline filling materials having a pH of 8 or more.

## Patentansprüche

1. Mehrschichtstruktur, umfassend eine Sperrschicht, die zwischen einer ersten Polymerschicht und einer zweiten Polymerschicht durch adhäsive Schichten adhäsiv eingebettet ist, wobei:
- die Sperrschicht ausgewählt ist aus der Gruppe, die aus Aluminiumfolie, einer Metalloxidschicht und einer metallisierten Polymerschicht, Vinylidenchlorid(co)polymeren, Ethylen-Vinylalkohol-Copolymeren, mit Vinylidenchlorid-(Co)polymer beschichteten Filmen, mit Ethylen-Vinylalkohol-Copolymer beschichteten Filmen, Hybridsystemen umfassend eine Mischung aus Vinylalkohol, umfassend (Co)Polymer(e) und Metalloxid(e), Hybridsystemen, umfassend eine Mischung aus Vinylalkohol, umfassend (Co)polymer(e) und anorganische(s) Schichtmineral(e) und Kombinationen davon besteht;
- die erste Polymerschicht ausgewählt ist aus der Gruppe, die aus Polyester, Polyamid und Polyolefin besteht;
- die zweite Polymerschicht ausgewählt ist aus der Gruppe, die aus Polyolefin, Polyacrylnitril, Acrylnitril/Methylacrylat-Copolymer, cyclischem Olefin(co)polymer, Ionomer und Kombinationen davon besteht;
- mindestens die adhäsive Schicht zwischen der Sperrschicht und der zweiten Polymerschicht vernetzte (Meth)acrylcopolymere umfasst;
wobei die Mehrschichtstruktur **gekennzeichnet ist durch** eine Haftfestigkeit gemäß ASTM F904 von mindestens 2,0 N/15 mm, vorzugsweise von mindestens 2,5 N/15 mm, besonders bevorzugt von mindestens 3,0 N/15 mm nach einem 1-monatigen Kontakt bei 55 °C mit einer Lösung mit einem pH-Wert von 8 oder mehr.

2. Mehrschichtige Struktur nach Anspruch 1, umfassend eine zusätzliche dritte Polymerschicht, die zwischen der Sperrschicht und der zweiten Polymerschicht adhäsiv eingebettet ist, wobei die adhäsiven Schichten vernetzte (Meth)acrylcopolymere umfassen.

3. Mehrschichtstruktur nach Anspruch 2, wobei die zusätzliche dritte Polymerschicht eine Polyamidschicht ist.

4. Mehrschichtstruktur nach einem der Ansprüche 1 bis 3, wobei die Sperrschicht eine Aluminiumfolie ist.

5. Mehrschichtstruktur nach einem der Ansprüche 1 bis 4, wobei die zweite Polymerschicht ein Polyolefin ist, das aus der Gruppe ausgewählt ist, die aus Polyethylenhomopolymer, Propylenhomopolymer, 1-Butylenhomopolymer, einem Ethylencopolymer, einem Propylencopolymer, einem 1-Butylencopolymer und Mischungen davon besteht.

6. Mehrschichtstruktur nach einem der Ansprüche 1 bis 5, wobei die Dicke der ersten Polymerschicht zwischen 6 und 50 µm, vorzugsweise zwischen 10 und 30 µm, umfasst ist.

7. Mehrschichtige Struktur nach einem der Ansprüche 1 bis 6, wobei die Dicke der zweiten Polymerschicht zwischen 20 und 250 µm, vorzugsweise zwischen 40 und 150 µm umfasst ist.

8. Mehrschichtige Struktur nach einem der Ansprüche 1 bis 7, wobei die Dicke der Aluminiumfolie zwischen 5 und 20 µm, vorzugsweise zwischen 6 und 12 µm umfasst ist.

9. Mehrschichtige Struktur nach einem der Ansprüche 1 bis 8, wobei die Dicke der adhäsiven Schicht zwischen 0,5 und 5 µm, vorzugsweise zwischen 2 und 4 µm umfasst ist.

10. Mehrschichtstruktur nach einem der Ansprüche 1 bis 9, wobei die vernetzte (Meth)acrylcopolymere umfassenden adhäsiven Schichten (Meth)acrylcopolymersegmente umfassen, die umfassen:
- 10-90 Teile copolymerisierte Vinylaromaten;
- 90-10 Teile copolymerisierte (Meth)acrylatmonomere;

11. Mehrschichtstruktur nach einem der Ansprüche 1 bis 10, wobei die vernetzte (Meth)acrylcopolymere umfassenden adhäsiven Schichten Komponenten umfassen, die aus der Gruppe ausgewählt sind, die aus Urethan, Amid, Isocyanurat, Harnstoff, Allophanat, Isocyanat und Mischungen davon besteht, und die (Meth)acrylcopolymersegmente verbinden.

12. Mehrschichtstruktur nach einem der Ansprüche 1 bis 11, wobei die vernetzte (Meth)acrylcopolymere umfassende adhäsive Schicht aus einer (Meth)acrylcopolymeremulsion auf Wasserbasis und einem Polyisocyanat erlangt ist.

13. Mehrschichtige Struktur nach einem der Ansprüche 1 bis 12, wobei die vernetzte (Meth)acrylcopolymere umfassende adhäsive Schicht erlangt ist aus:
einer (Meth)acrylcopolymeremulsion auf Wasserbasis, wobei das (Meth)acrylcopolymer umfasst:
- 10-90 Teile copolymerisierte Vinylaromaten;
- 90-10 Teile copolymerisierte (Meth)acrylatmonomere;
und ein aliphatisches Polyisocyanat; vorzugsweise ein aliphatisches Diisocyanat.

14. Verwendung der Mehrschichtstruktur nach einem der Ansprüche 1 bis 13 zur Herstellung von Siegelrandbeuteln, Säckchen, Beuteln und Beutel-auf-Ventil-Systemen.

15. Verwendung der Mehrschichtstruktur nach einem der Ansprüche 1 bis 13 zur Herstellung von Siegelrandbeuteln, Säckchen, Beuteln und Beutel-auf-Ventil-Systemen für alkalische Füllmaterialien mit einem pH-Wert von 8 oder mehr.

## Revendications

1. Structure multicouche, comprenant une couche barrière, intercalée de manière adhésive entre une première couche polymère et une deuxième couche polymère par des couches adhésives, dans laquelle :
- la couche barrière est choisie dans le groupe constitué par une feuille d'aluminium, une couche d'oxyde métallique, et une couche polymère métallisée, des (co)polymères de chlorure de vinylidène, des copolymères d'éthylène-alcool vinylique, des films revêtus de (co)polymère de chlorure de vinylidène, des films revêtus de copolymère d'éthylène-alcool vinylique, des systèmes hybrides comprenant un mélange d'alcool vinylique comprenant (co)polymère(s) et oxyde(s) métallique(s), des systèmes hybrides comprenant un mélange d'alcool vinylique comprenant (co)polymère (s) et minéral (ux) en couches inorganiques et des combinaisons de ceux-ci ;
- la première couche polymère est choisie dans le groupe constitué par polyester, polyamide et polyoléfine ;
- la deuxième couche polymère est choisie dans le groupe constitué par polyoléfine, polyacrylonitrile, copolymère acrylonitrile/acrylate de méthyle, (co)polymère d'oléfine cyclique, ionomère et des combinaisons de ceux-ci ;
- au moins la couche adhésive entre la couche barrière et la deuxième couche polymère comprend des copolymères (méth)acryliques réticulés ;
ladite structure multicouche étant **caractérisée par** une résistance d'adhésion, selon la norme ASTM F904, d'au moins 2,0 N/15 mm, de préférence d'au moins 2,5 N/15 mm, de manière davantage préférée d'au moins 3,0 N/15 mm après un contact de 1 mois à 55 °C avec une solution ayant un pH de 8 ou plus.

2. Structure multicouche selon la revendication 1, comprenant une troisième couche polymère supplémentaire, intercalée de manière adhésive entre la couche barrière et la deuxième couche polymère, les couches adhésives comprenant des copolymères (méth)acryliques réticulés.

3. Structure multicouche selon la revendication 2, dans laquelle la troisième couche polymère supplémentaire est une couche de polyamide.

4. Structure multicouche selon l'une quelconque des revendications 1 à 3, dans laquelle la couche barrière est une feuille d'aluminium.

5. Structure multicouche selon l'une quelconque des revendications 1 à 4, dans laquelle la deuxième couche polymère est une polyoléfine choisie dans le groupe constitué par un homopolymère de polyéthylène, un homopolymère de propylène, un homopolymère de 1-butylène, un copolymère d'éthylène, un copolymère de propylène, un copolymère de 1-butylène et des mélanges de ceux-ci.

6. Structure multicouche selon l'une quelconque des revendications 1 à 5, dans laquelle l'épaisseur de la première couche polymère est comprise entre 6 et 50 µm, de préférence entre 10 et 30 µm.

7. Structure multicouche selon l'une quelconque des revendications 1 à 6, dans laquelle l'épaisseur de la deuxième couche polymère est comprise entre 20 et 250 µm, de préférence entre 40 et 150 µm.

8. Structure multicouche selon l'une quelconque des revendications 1 à 7, dans laquelle l'épaisseur de la feuille d'aluminium est comprise entre 5 et 20 µm, de préférence entre 6 et 12 µm.

9. Structure multicouche selon l'une quelconque des revendications 1 à 8, dans laquelle l'épaisseur de la couche adhésive est comprise entre 0,5 et 5 µm, de préférence entre 2 et 4 µm.

10. Structure multicouche selon l'une quelconque des revendications 1 à 9, dans laquelle le copolymère (méth)acrylique réticulé comprenant des couches adhésives comprend des segments de copolymère (méth)acrylique comprenant :
- 10 à 90 parties d'aromatiques vinyliques copolymérisés ;
- 90 à 10 parties de monomères de (méth)acrylate copolymérisés ;

11. Structure multicouche selon l'une quelconque des revendications 1 à 10, dans laquelle le copolymère (méth)acrylique réticulé comprenant des couches adhésives comprend des fractions choisies dans le groupe constitué par l'uréthane, l'amide, l'isocyanurate, l'urée, l'allophanate, l'isocyanate et des mélanges de ceux-ci, reliant des segments de copolymère (méth)acrylique.

12. Structure multicouche selon l'une quelconque des revendications 1 à 11, dans laquelle le copolymère (méth)acrylique réticulé comprenant une couche adhésive est obtenu à partir d'une émulsion de copolymère (méth)acrylique à base d'eau et d'un polyisocyanate.

13. Structure multicouche selon l'une quelconque des revendications 1 à 12, dans laquelle le copolymère (méth)acrylique réticulé comprenant une couche adhésive est obtenu à partir :
d'une émulsion de copolymère (méth)acrylique à base d'eau, ledit copolymère (méth)acrylique comprenant :
- 10 à 90 parties d'aromatiques vinyliques copolymérisés ;
- 90 à 10 parties de monomères de (méth)acrylate copolymérisés;
et d'un polyisocyanate aliphatique ; de préférence un diisocyanate aliphatique.

14. Utilisation de la structure multicouche selon l'une quelconque des revendications 1 à 13 pour la fabrication de sachets scellés, de poches, de sacs et de systèmes valve à poche.

15. Utilisation de la structure multicouche selon l'une quelconque des revendications 1 à 13 pour la fabrication de sachets scellés, de poches, de sacs et de systèmes valve à poche pour des matières de remplissage alcalines ayant un pH de 8 ou plus.
